# EUROPEAN PATENT APPLICATION

(11) **EP 1 662 434 A1**
(43) Date of publication of application: **31.05.2006**
(21) Application number: 05025782.3
(22) Date of filing: 25.11.2005
(51) Int. Cl.: G06Q 30/00, H04L 29/06

(54) **Method for providing an auction service using a tightly coupled multimedia conference in terminals and apparatus thereof**

(30) Priority: 25.11.2004 KR 2004097680
(71) Applicant: Samsung Electronics Co., Ltd., Suwon-si, Gyeonggi-Do (KR)
(72) Inventor: Kim, Yong-Chul, Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a method for providing an auction service to terminals using a tightly coupled multimedia conference and an apparatus thereof. The method includes determining participants who use the terminals and auction service session, deciding an auction policy composed of a membership policy and a media policy related to the auction service, re-inviting only participants who are in accord with the auction policy among participants who take part in the multiconference using mass invitation, multicasting auction information and article information of the auction service to the auction service participants, and receiving prices offered for an auction article from the participants who have obtained floors and if a bid price of the auction article is decided among the offered prices, notifying the participants of the bid price.

## Description

The present invention relates generally to a mobile communication system, and more particularly to an auction technology using a tightly coupled multimedia conference in Wideband Code Division Multiple Access (WCDMA) terminals.

Efforts to realize multimedia conference technology have been in progress for twenty years, and have been focused around international or standardization organizations such as Internet Engineering Task Force (IETF) and others. The H.323 protocol, established by International Telecommunication Union Study Group (ITU-T SG16), one such standards organization, is a standard technology widely used in a multimedia conference system or service development.

A tightly coupled multimedia conference "tightly-coupled multimedia conference" proposed by XCON (a working group of IETF) is a technology for supporting communications and services among several people based on multicast technology on the Internet. The tightly coupled multimedia conference is composed of several entities and forms, maintains or removes sessions using a Session Initiation Protocol (SIP). Additionally, the tightly coupled multimedia conference uses a Real Transfer Protocol (RTP) for multimedia transmission/reception, and can be commercialized in a centralized form for user authentication and billing.

More specifically, according to the centralized tightly-coupled multi-conference, a conference server located in the center controls calls of all conference participants. Services such as participation, withdrawal, invitation, etc., are supported under the control of the server. Also, the centralized tightly-coupled multi-conference controls the transfer of produced information such as a decision, change, creation, deletion, etc., of the conference policy by accessing the conference policy server using a Conference Policy Control Protocol (CPCP). This tightly coupled multi-conference requires a conference control mechanism such as a conference management, user management, floor management, floor control, conference merger/separation, etc., and provides the corresponding service to the participants.

Using the tightly coupled multimedia conference, many data services, in addition to voice calls, can be provided to the participants who take part in the conference for specified purposes. The tightly coupled multimedia conference has been proposed and standardized by XCON of IETF for a strong security and user authentication and easy billing on demand. However, no concrete article/service has not yet been proposed, and no procedure has yet been defined.

Accordingly, the present invention has been designed to solve the above and other problems occurring in the prior art.

It is the object of the present invention to provide an auction service based on a tightly coupled multimedia conference using mobile communication terminals.

This object is solved by the subject matter of the independent claims.

Preferred embodiments are defined in the dependent claims.

According to an aspect of the present invention, there is provided an auction service to conference participants with the session and policy for the participants maintained on a tightly coupled multimedia conference using the existing protocols.

In one aspect of the present invention, there is provided a method for providing an auction service to mobile communication terminals using a tightly coupled multimedia conference, which includes the steps of deciding an auction policy related to the auction service, re-inviting only participants who are in accord with the auction policy among participants who take part in the multimedia conference through a mass invitation, multicasting auction information and article information of the auction service to the auction service participants, and receiving prices offered for an auction article from the participants who have obtained the floor and if a bid price of the auction article is decided among the offered prices, notifying the participants of the bid price.

In another aspect of the present invention, there is provided an apparatus in a system for providing an auction service to terminals using a tightly coupled multimedia conference, which includes an auction conference server for providing the auction service of both tangible and intangible articles, a notification server for announcing information related to the auction service, a conference policy unit for deciding an auction policy related to the auction service, a conference policy server for processing all rules that exercise jurisdiction over the auction service according to the decided auction policy; a focus for controlling the provided auction service through a re-invitation session for participants, who satisfy the auction policy, using a mass invitation, a mixer for multicasting transmitted media stream to the participants; a floor chair for managing the floor of the whole auction service; and the participants who intend to take part in the auction service through the terminals.

The present invention will be more apparent from the following detailed description taken in conjunction with the accompanying drawings, in which:
FIG. 1 is a view illustrating an auction system and procedure according to a preferred embodiment of the present invention;
FIG. 2 is a view illustrating a protocol and signaling procedure according to a preferred embodiment of the present invention; and
FIG. 3 is a view illustrating an auction procedure according to a preferred embodiment of the present invention.

Preferred embodiments of the present invention will be described in detail hereinafter with reference to the accompanying drawings. In the following description of the present invention, the same drawing reference numerals are used for the same elements even in different drawings. Additionally, a detailed description of known functions and configurations incorporated herein will be omitted when it may obscure the subject matter of the present invention. Additionally, a number of specific features such as detailed constituent elements are given below in consideration of their functions in the present invention, and they may differ according to the intention of a user, operator, or custom. Accordingly, they should be defined based on the contents of the whole specification of the present invention.

The present invention proposes an auction service using a tightly coupled conference, so that mobile terminals can take part in the auction service for making tangible and intangible articles available for auction.

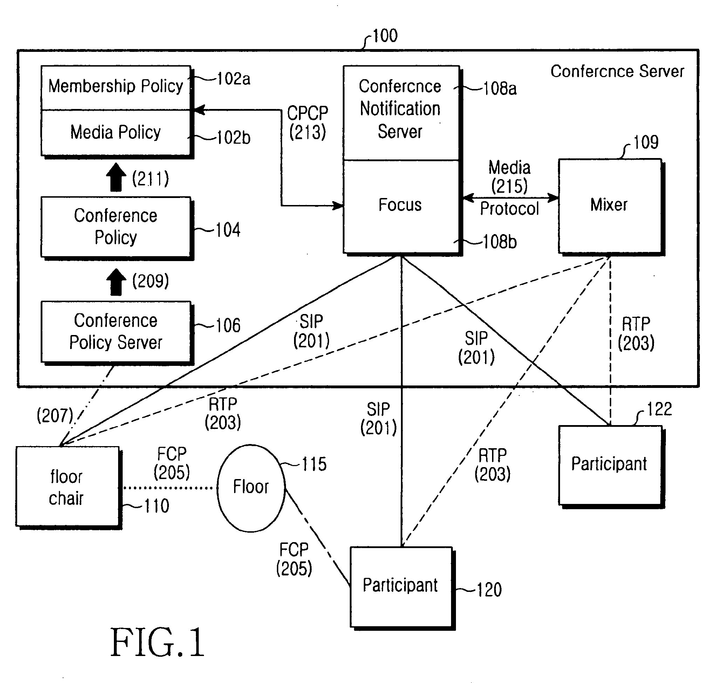

Referring to FIG. 1, the auction system according to the present invention includes a conference server 100, a floor chair 110 and participants 120 and 122. The conference server 100 includes a focus 108b, a conference notification server 108a, a conference policy server 106, a conference policy unit 104 composed of a membership policy unit 102a and a media policy unit 102b, and a mixer 109.

The conference notification server 108a serves to notify participants 120, 122 with messages about auction conference information by providing a notification service through an SIP protocol. The messages about the auction conference information include messages that announce the opening and closing of the auction, the type of auction item, a successful bid on the auction article, the opening bid price, etc.

The conference policy server 106 manages and processes a policy goveming the auction service of the auction conference through the conference policy unit 104. The conference policy unit 104 encompasses a complete set of all rules that exercise jurisdiction over the operation of the auction conference, and includes a membership policy 102a and a media policy 102b.

The membership policy 102a is a part of the auction conference policies that establish requirements for participants. These membership policies may include age limits, gender restrictions, etc. thereby eliminating ineligible participants. If necessary, the membership policy may allow participation on an anonymous basis. The media policy 102b is a part of the auction conference policies providing a policy for media, and provides media information of data to be exchanged among the participants 120 and 122 before the focus 108b starts Session Description Protocol (SDP) negotiations.

The mixer 109 receives, re-processes and distributes the same kind of media stream to the participants using the multicasting. The data that the mixer 109 can process is limited to four types, video, audio, text and application program.

The participants 120 and 122 are users or automata (self-operating machines or mechanisms, e.g., robots) that take part in the conference. The participants 120 and 122 form the focus 108b and session according to the membership policy 102a. The participants 120 and 122 are classified into four groups: normal participants who can receive the service of the auction conference; participants who just form the focus 108b and session, but cannot receive the auction service; anonymous users who register their attendance but conceal their identities; and hidden users whose attendance and identities are totally concealed. In the present invention, the participants 120 and 122 are terminal holders who take part in the auction conference with terminals, respectively.

The floor 115 is an authority to temporarily access a specified common resource. In the auction conference, the participants 120 and 122 obtain the floor and announce offered prices (made bids) for the auction article, respectively. This is equivalent to a conventional auction where participants 120 and 122 raise their hands and make bids for the auction article according to the auction procedure.

The floor chair 110 is the master of auctions who manages the floor 115 among the whole auction service, and serves as an entity that invites a voting service to the conference policy server 106 if it is proposed that the participants 120 and 122 vote for the offered prices for the auction article.

Participants 120 and 122 request the floor based on a floor request set or floorholder set of a Floor Control Protocol (FPC). The floor chair 110 selects, in order or at his discretion, one participant to take the floor 115, from among those requesting to take the floor 115.

The focus 108b takes charge of a central control or logical function in the auction conference. The focus 108b manages an SIP session for all the participants 120 and 122, and has an authority to access the membership/media policies 102a and 102b. The focus 108b re-invites eligible participants through the mass invitation function and session of the SIP according to the membership/media policies 102a and 102b, re-negotiates the SDP, and makes it possible to provide the voting service for offering the prices for the auction article as it maintains the existing session. That is, the focus provides the auction service to the participants who satisfy the membership/media policies 102a and 102b.

The above-described entities are logical units, and in practice, the entities may correspond to independent servers that constitute a server group, or may correspond to respective modules that are all installed in one server.

Hereinafter, the protocols according to the present invention will be explained in detail.

The Session Initiation Protocol (SIP) is a signaling protocol that creates, modifies and terminates a multimedia service session. The SIP can use both a Transmission Control Protocol (TCP) and a User Datagram Protocol (UDP) as protocols of an application layer, and adopts a request/response structure.

The Session Description Protocol (SDP) is a protocol that exchanges information about a media type to be exchanged in the SIP session. The Real Transfer Protocol (RTP) is an Internet protocol for transmitting real-time data such as audio and video that is executed on the UDP protocol.

The Conference Policy Control Protocol (CPCP) is a protocol used for the participants 120 and 122 to access the conference policy unit 102. The Floor Control Protocol (FCP) is a protocol for controlling the floor 115 at auction, and makes the use of common resources of the auction conference, possible even in the case in which they are mutually or non-mutually exclusive.

The media protocol is a protocol used between the focus 108b and the mixer 109 to exchange information about the media.

Hereinafter, the procedure of the auction service proceeding in the respective entities will be explained.

Steps 201 and 203 refer to a process of participating in a normal auction conference. Specifically, the floor chair 110 or the participants 120 and 122 take part in the auction conference by creating sessions using the SIP, receive auction conference information from the conference notification server 108a, and transmit/receive an auction conference data stream using the RTP protocol.

At step 205, the participant 120 floors the auction conference using the FCP. Here, the participant's obtaining of the floor 115 means that the participant 120 (except for the floor chair 110) decides and bids the price of the auction article by obtaining the floor and taking the floor. The floor information related to the floor is transferred to the mixer 109 using the RTP protocol, and the mixer 109 distributes the floor information to other participants using the multicasting.

At step 207, the floor chair 110 requests putting of a specified article at auction to the conference server 100. At step 209, the conference policy server 106 that has received the request decides whether the requested auction article is in accord with the conference policy.

At step 211, if the requested auction article is in accord with the corresponding conference policy, the conference policy 104 modifies the membership policy 102b and the media policy 102a as needed. That is, the membership policy 102b can assess the status of the participants 120 and 122 and can anonymously process the participants 120 and 122 as needed. The media policy 120a defines the information and data to be mutually exchanged before the SDP negotiations are carried on.

At step 213, the membership policy 102a and the media policy 102b transfer items requested by the membership policy 102a and the media policy 102b to the focus 108b using the CPCP. Then, the focus 108b re-negotiates the SDP by performing a re-invitation process using the SIP protocol through the mass invitation, and thus provides a voting service to the corresponding participants 120 and 122 who are in accord with the membership policy 120a as it maintains the existing session.

At step 215, the focus 108b makes it possible that the mixer 109 transmits/receives the auction information based on the media policy 102b transferred through the received CPCP.

Hereinafter, the protocol and signal procedure related to the auction method according to the preferred embodiment of the present invention will be explained with reference to FIGs. 1 to 2.

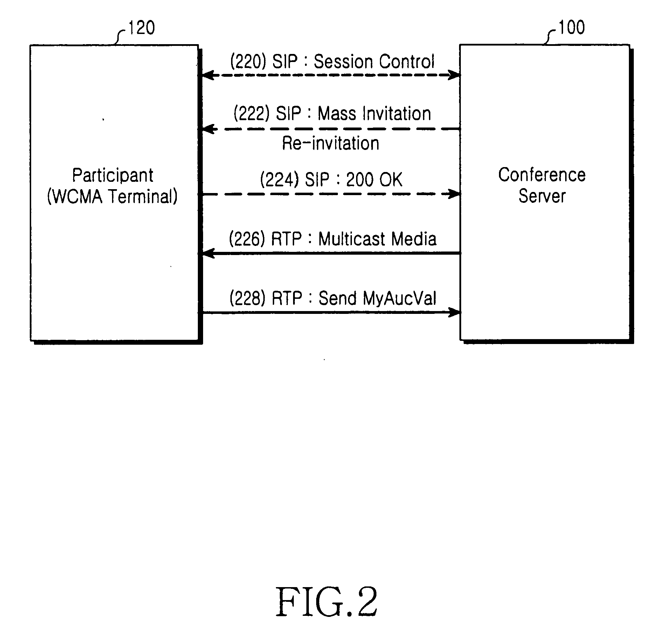

FIG. 2 is a view illustrating the protocol and signaling procedure according to the preferred embodiment of the present invention.

Referring to FIG. 2, the conference server 100 provides the auction service to the participants, and the participants 120 (participant 120 serving as an example) take part in the auction service using their terminals, for example, Wideband Code Division Multiple Access (WCDMA) terminals.

Step 220 is a session formed between the participants' terminals 120 and the conference server 100 before the auction procedure starts, and means that the participants' terminals 120 successfully take part in the conference.

At step 222, the focus 108b re-invites the participants who are in accord with the membership/media policies of the auction service through the mass invitation on the basis of the conference policy 104. The focus 108b prepares the ground for the providing of the auction service as maintaining the existing session by modifying the SDP information of the session.

At step 224, the participants' terminals 120 accept the re-invitation and report that they are ready to receive the auction service through the signal of the SIP protocol to the conference server 100. Simultaneously, the conference server 100 processes the conference participants as the auction participants using a flag value based on the membership policy 120b.

Step 226 is a process of actually multicasting media information about the tangible or intangible auction article to the participants' terminals 120 using the RTP protocol. In this case, the participants are prohibited from using the floor, or the use of the floor is limited to the floor chair 110 only.

At step 228, the participants' terminals 120 receive the auction media through the RTP, obtain the floor, and transmit the offered prices to the conference server 100 by unicast using the RTP protocol. Thereafter, the conference server 100 notifies the offered auction prices or the bid price to the participants' terminals 120 through the conference notification server 108a using the SIP.

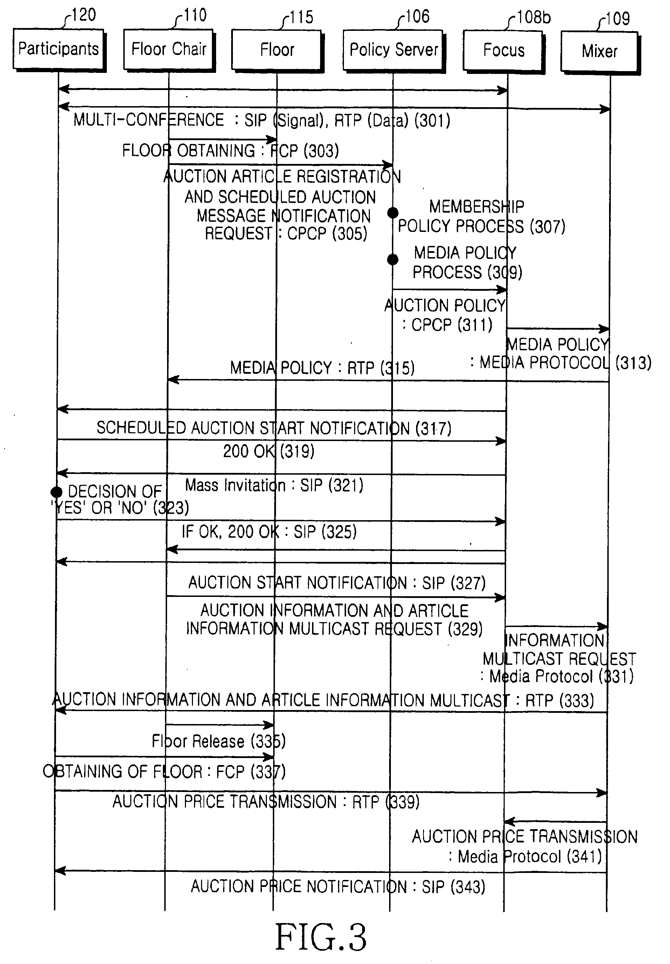

FIG. 3 is a view illustrating the auction procedure according to a preferred embodiment of the present invention.

Referring to FIG. 3, at step 301, the participants 120 and the focus 108b and the mixer 109 of the conference server form the normal session for the multimedia conference service using the SIP and RTP protocols.

At step 303, the floor chair 110 obtains the floor in order to notify the opening of the auction to be served. At step 305, the floor chair 110 that has obtained the floor transmits an auction notification request message providing information such as the auction policy, auction request, auction article registration request, estimated auction time, etc., to the conference policy server 106.

At steps 307 to 309, the conference policy server 106 that has received the auction notification request message processes the membership and media policies 102b and 102a of the requested auction service. That is, the conference policy server performs a screening of the participants according to limited conditions such as age, sex, etc., of the auction service participants and the type of file supported while the participants take part in the auction service.

At step 311, the conference policy server 106 transmits the results of processing at steps 307 to 309 and policy information that indicates the membership and media policies 102b and 102a to the focus 108b. At step 313, the focus 108b prepares for the voting media of the auction service by transmitting the received media processing request to the mixer 109 based on the media policy 102a. At this time, the focus 108b and the mixer communicate with each other using the media protocol.

At step 315, the conference policy server informs the floor chair of the supportable media policy. At step 317, the focus 108b notifies all the participants 120 of the scheduled opening of the auction, and the participants 120 who have received the notification reply to the notification at step 319.

At step 321, the focus 108b re-invites the participants who are in accord with the membership policy 102a through the mass invitation function using the SIP protocol. Here, the focus modifies the SDP information of the formed session, and performs the auction procedure as maintaining the existing session.

At step 323, the participants 120 decide whether to participate the notified auction. After deciding whether to participate in the notified auction, the participants 120 inform the focus of their decisions using a '200 OK' response message of the SIP at step 325.

The participants 120 and the conference server 100 complete the process of preparing the auction server through the steps 301 to 325, and start the auction service.

At step 327, the focus 108b notifies only the participants who are in accord with the membership policy 102a and the participants 120 who have decided to take part in the auction of the opening of the auction. At step 329, the floor chair 110 request the focus 108b to multicast the auction information and auction article information to the participants 120. At step 331, the focus 108b, which has received the multicast request, requests the mixer to multicast the auction information using the media protocol.

At step 333, the mixer 109 multicasts the auction information and article information to the participants 120 using the RTP protocol. At step 335, if the opening of the auction and auction information are multicast, the floor chair 110 releases the floor, and gives the floor to other participants so that they can actively take part in the auction, i.e., so that they can offer and notify the auction price.

At step 337, the participant 120 who has obtained the floor at step 337 offers the auction price and requests to announce the offered auction price at step 339.

At step 341, the mixer 109 that has received the auction price transfers the offered price to the focus 108b. At step 343, the focus 108b that has received the offered price notifies the other participants of the offered price for the corresponding article using the conference notification server.

The steps 337 to 343 are repeatedly performed whenever the participants who take part in the auction announce their own offered prices according to the predetermined conditions of the corresponding auction, and the floor is kept assigned to only one participant at a time by the FCP protocol. Here, the corresponding auction is performed until the predetermined time elapses or the offered price for the corresponding article satisfies the range of upper/lower limit values. The conditions of the auction may or may not be reported to the participants.

As described above, the effects obtained by the representative of the disclosed invention are as follows.

The present invention can provide the auction service to the terminal users who take part in the multimedia conference by providing opportunity of participating in the auction to the terminal users using the tightly coupled conference, and enable an auction service provider to make an additional profit as well.

While the present invention has been shown and described with reference to certain preferred embodiments thereof, it will be understood by those skilled in the art that various changes in form and details may be made therein without departing from the scope of the present invention as defined by the appended claims.

## Claims

1. An apparatus in a system for providing an auction service to participants who intend to take part in the auction service through terminals using a tightly coupled multimedia conference, the apparatus comprising:
an auction conference server for providing the auction service of tangible and intangible articles;
a notification server for announcing information related to the auction service;
a conference policy unit for deciding an auction policy related to the auction service;
a conference policy server for processing all rules that exercise jurisdiction over the auction service according to the decided auction policy;
a focus for controlling the provided auction service by re-inviting session for participants that satisfies the auction policy using a mass invitation function;
a mixer for multicasting transmitted media stream to the participants; and
a floor chair for managing floors of the whole auction service.

2. The apparatus as claimed in claim 1, wherein the auction service information includes the opening and closing of the auction, a type of auction item, a successful bid on the auction article and an opening bid price.

3. The apparatus as claimed in claim 1 or 2, wherein the auction policy includes a membership policy and a media policy.

4. The apparatus as claimed in claim 3, wherein the membership policy is a policy toward the participants corresponding to an age limit and a gender restriction of the participants, performs a screening of the participants and provides an anonymous processing function, as needed.

5. The apparatus as claimed in claim 3 or 4, wherein the media policy is a policy toward media information and data to be mutually exchanged between the focus and the all participants before the focus re-invites the session for the participants.

6. The apparatus as claimed in one of claims 1 to 5, wherein the focus receives a notification whether the re-invited participants take part in the auction service, notifies only the participants who have decided to take part in the auction service of a start of the auction service and provides the auction service.

7. The apparatus as claimed in one of claims 1 to 6, wherein the floor chair, in order or at his discretion designates the participants from a list of the participants who have requested the floors, and provides the floors to designated participants.

8. The apparatus as claimed in claim 7, wherein the floor is an authority to temporarily access specified common resources, and the participant offers a bid for the auction article through the auction service by obtaining the floor.

9. The apparatus as claimed in one of claims 1 to 8, wherein the mixer receives and processes data which is one of video, audio, text and application program.

10. The apparatus as claimed in one of claims 1 to 9, wherein the participants are classified into normal participants who can receive the auction service, participants who form the focus and session but cannot receive the auction service, anonymous users who announce their attendance but conceal their identities, and hidden users whose attendance and identities are all concealed.

11. A method for providing an auction service to terminals using a tightly coupled multimedia conference, the method comprising the steps of:
deciding an auction policy related to the auction service;
re-inviting only participants who are in accord with the auction policy among participants who take part in the multimedia conference using a mass invitation;
multicasting auction information and article information of the auction service to the auction service participants; and
receiving prices offered for an auction article from the participants who have obtained floors, and if a bid price of the auction article is decided among the offered prices, notifying the participants of the bid price.

12. The method as claimed in claim 11, wherein the auction policy includes of a membership policy and a media policy.

13. The method as claimed in claim 12, wherein the membership policy is a policy toward the participants corresponding to an age limit and a gender restriction of the participants, performs a screening of the participants and provides an anonymous processing function as needed.

14. The method as claimed in claim 12 or 13, wherein the media policy is a policy toward media information and data to be mutually exchanged between the focus and the whole participants before the focus re-invites the session for the participants.

15. The method as claimed in one of claims 11 to 14, further comprising notifying a scheduled start of the auction service to the multimedia conference participants.

16. The method as claimed in one of claims 11 to 15, further comprising receiving a decision as to whether the re-invited participants take part in the auction service from the re-invited participants.

17. The method as claimed in one of claims 11 to 16, wherein the floor chair designates the participants from a list of the participants who have requested the floors in order or using discretion, and provides the floors to the designated participants.

18. The method as claimed in one of claims 11 to 17, wherein the participants are classified into normal participants who can receive the auction service, participants who form the focus and session but cannot receive the auction service, anonymous users who notify their attendance but conceal their identities, and hidden users whose attendance and identities are all concealed.
